# EUROPÄISCHE PATENTSCHRIFT

(11) **EP 2 038 849 B1**
(45) Veröffentlichungstag und Bekanntmachung des Hinweises auf die Patenterteilung: **07.08.2019**
(21) Anmeldenummer: 07764396.3
(22) Anmeldetag: 21.06.2007
(51) Int. Cl.: G07B 15/00, G07B 15/06

(54) **VERFAHREN UND VORRICHTUNG ZUR GEWÄHRLEISTUNG DES DATENSCHUTZES BEI DER OFFBOARD MAUTERFASSUNG**
METHOD AND APPARATUS FOR ENSURING DATA PROTECTION DURING OFF-BOARD TOLL METERING
PROCÉDÉ ET DISPOSITIF POUR GARANTIR LA PROTECTION DES DONNÉES LORS DE LA DÉTECTION DE TÉLÉPÉAGE

(30) Priorität: 27.06.2006 DE 102006029383
(43) Veröffentlichungstag der Anmeldung: 25.03.2009
(73) Patentinhaber: Deutsche Telekom AG, 53113 Bonn (DE)
(72) Erfinder: EBERSBERGER, Georg, 40589 Düsseldorf (DE); GÜNTHER, Bernd, 53229 Bonn (DE)
(74) Vertreter: 2K Patentanwälte Blasberg Kewitz & Reichel
(86) Internationale Anmeldenummer: PCT/DE2007/001098
(87) Internationale Veröffentlichungsnummer: WO 2008/000227

(56) Entgegenhaltungen:
- EP-A- 1 475 752
- WO-A-01/11571
- WO-A-2006/015792
- US-A1- 2003 130 893

## Beschreibung

Die Erfindung betrifft ein Verfahren und Vorrichtungen zur Sicherstellung des Datenschutzes bei der Bestimmung von Mautstrecken, mit einem Server und einer Onboard Unit (OBU), die miteinander kommunizieren, wobei der Server Kartenmaterial aufweist, so dass anhand von anonymisierten Positionsdaten Mautstrecken bestimmbar sind.

### Gebiet der Erfindung

Die LKW Mauterfassung in Deutschland wird im Wesentlichen mit der im LKW verbauten OBU durchgeführt. Die OBU für die Mauterfassung berechnet aus zyklisch mit Hilfe des GPS Systems ermittelten Positionswerten (=GPS Positionen), den zurückgelegten Weg auf mautpflichtigen Strecken und daraus die Maut. Damit nur Fahrten auf mautpflichtigen Strecken vergebührt werden, validiert die OBU die ermittelten Positionen gegen eine intern gespeicherte digitale Karte mit den mautpflichtigen Streckensegmenten, d.h. nur wenn sich die OBU auf mautpflichtigen Stecken befindet, werden Gebühren berechnet. Da prinzipiell tageszeitindividuelle Tarifmodelle möglich sind, werden auch diese, teilweise vergröbert, in der OBU hinterlegt. Die gefahrenen mautpflichtigen Streckensegmente werden dann zusammen mit einer Identifikation des Mautpflichtigen (Maut-ID) an die Mauterhebungsstellen zur Abrechnung gesendet. Die in der OBU gespeicherten Karten können ab OBU Version 2 (OBU2) "über die Luft" bzw. Funk aktualisiert und damit das mautpflichtige Streckennetz geändert werden. Durch diese Arbeitsweise und die Datenmengen, die von der OBU intern gespeichert und ständig aktualisiert werden müssen, stellen die OBU und deren Betrieb ein komplexes, teueres und inflexibles System dar.

Als Alternative zu dem beschriebenen und in Deutschland implementierten Verfahren gibt es das Konzept der Offboard Mauterfassung. Hierbei wird in der OBU keine digitale Karte gespeichert, sondern nur Positionen ermittelt, gespeichert und zusammen mit der Maut-ID an einen externen Server zur Auswertung und Mauterfassung weitergeleitet, typischerweise über GSM oder GPRS, UMTS, WLAN oder andere drahtlose Kommunikationsverfahren. Auf dem externen Server wird mit den in der OBU erfassten Positionen zur Bestimmung der befahrenen mautpflichtigen Streckensegmente ein Abgleich gegen die auf dem Server gespeicherte digitale Karte mit den mautpflichtigen Strecken durchgeführt. Dann werden die mautpflichtigen Streckensegmente zur Abrechnung an die Mauterhebungsstellen weitergeleitet. Die OBU muss damit nur Positionsdaten sammeln und weiterleiten und keinen Abgleich mit einer Karte durchführen. Auch muss weder eine Karte noch das Tarifmodell auf der OBU gespeichert und aktualisiert werden. Damit wird die OBU einfach, billig und softwaretechnisch stabil. Das Problem aus Sicht des Datenschutzes ist bei diesem Verfahren die Übermittlung und Speicherung aller Positionen, und nicht nur der mautpflichtigen Streckensegmente, wenn diese mit der Maut-ID verbunden sind. Damit könnte die Route der OBU, und damit des Fahrzeugs, auch auf nicht mautpflichtigen Strecken verfolgt werden.

### Überblick über die Erfindung:

Aufgabe der vorliegenden Erfindung ist es, ein verbessertes Verfahren zur Sicherstellung des Datenschutzes bei der Offboard Mauterfassung mittels entsprechender OBU bereitzustellen.

Gelöst wird diese Aufgabe durch eine Erfindung mit den Merkmalen der unabhängigen Ansprüche.

Die vorliegende Erfindung betrifft ein Verfahren, mit dem das Offboard-Mauterfassungsverfahren unter Beibehaltung seiner Vorzüge so ausgeführt werden kann, dass die Anforderungen des Datenschutzes hinsichtlich Anonymität und Speicherung von Positionsdaten berücksichtigt werden.

Dazu findet eine Trennung der Verfahrensschritte "Filterung der Positionsdaten auf Mautrelevanz" und "Übermittlung der Mauterhebungsdaten" zur Vergebührung und Abrechnung derart statt, dass der vorgelagerte Filterprozess ohne Kenntnis der Identität des Mautpflichtigen durchgeführt wird. Dabei übermittelt die OBU regelmäßig die Positionsinformationen von Teilwegstrecken (z. B. alle 50 oder 100 km oder alle 5 Minuten) ohne Hinweis auf die Identität des Absenders an eine zentrale Filtereinheit, welche mittels Kenntnis des vollständigen Streckennetzes und aktuellen Tarifmodellen die tatsächlich mautpflichtigen Streckensegmente bestimmt. Die Informationen zu diesen mautpflichtigen Streckensegmenten werden an die OBU zurückgesendet. Sobald die OBU den korrekten Erhalt bestätigt hat, werden sämtliche zentral in der Filtereinheit gehaltenen Daten zu dieser Transaktion gelöscht. Die OBU speichert dann die mautpflichtigen Segmente bis zur Übermittlung der gesamten Strecke an die Mautabrechnungsstelle. Niemals wird die gesamte Strecke an die zentrale Filtereinheit gesendet, ebenso wenig erhält diese Kenntnis über die Maut-ID. Die Teilschritte zur Filterung auf Mautrelevanz und zur Übermittlung der Mautdaten laufen völlig asynchron über unterschiedliche Verbindungen, die für jede Datenübertragung separat aufgebaut werden. Da bei jeder Übertragung von der OBU zu den externen Instanzen eine andere Verbindung mit nicht vorherzusehenden IP-Adressen benutzt wird, sind Rückschlüsse aus beiden Verarbeitungsinstanzen auf die jeweils andere ausgeschlossen. Insbesondere kann an keiner Stelle des Systems weder die Gesamtroute, sofern diese nichtmautpflichtige Strecken beinhaltet, zusammengefügt, noch ein Bezug zum Mautpflichtigen hergestellt werden.

Wegen der Rücksendung der tatsächlich mautpflichtigen Segmente an die OBU steigt das Datenkommunikationsvolumen gegenüber einem Verfahren, welches diesen Schritt vermeidet, in geringem Umfang an. Dabei sind verschiedene Verfahrensausprägungen denkbar, die ermöglichen, auch diesen Aspekt zu optimieren. So können beispielsweise alternativ oder in Kombinationen folgende Informationselemente nach der Filterung an die OBU gesendet werden:
- Straßensegment-Ids
- Straßenklassenkategorien mit Weglänge
- Bewertete Tarifdatensätze für die Teilwegstrecke

Mit dem beschriebenen Verfahren wird erreicht, dass die gefahrene gesamte Strecke für den externen Server nicht mehr ermittelbar und/oder einer Maut-ID und damit einem Mautpflichtigen zuzuordnen ist. Der Datenschutz ist somit wieder gewährleistet.

Nicht von der Erfindung gedeckt ist ein Serversystem, insbesondere Filtereinheit, zur Bestimmung von Mautstrecken, das mit einer OBU kommuniziert, umfassend:
- Einen Speicher, auf dem Kartenmaterial abgespeichert ist, so dass anhand von Positionsdaten Mautstrecken bestimmbar sind, umfassend die folgenden Schritte;
- Einen Netzwerkanschluss, über den mit der OBU kommuniziert wird;
- Eine Bearbeitungseinheit, die so eingerichtet und ausgestattet ist, dass anhand der Positionsdaten, die von der OBU übermittelt werden, durch Zugriff auf den Speicher diese auf Mautrelevanz überprüfbar ist, wobei eine Mautrelevanz gegeben ist, wenn eine Mautstrecke befahren wird, wobei über die OBU keine Kenntnis der Identität vorliegt, um, falls eine Mautrelevanz besteht, Mauterhebungsdaten zur Vergebührung und Abrechnung an die OBU zu übermitteln, wobei die Mauterhebungsdaten, die Informationen zur Vergebührung umfassen.

Dabei wird das Speichermittel so angesteuert, dass nachdem die OBU den korrekten Erhalt der Mauterhebungsdaten bestätigt hat, sämtliche zentral gehaltenen Daten zu dieser Transaktion gelöscht werden.

Vorzugsweise sind die Teil-Routen bestimmbar, auch wenn nicht die gesamte gefahrene Strecke gesendet wird und keine den Mautpflichtigen oder die OBU oder das Fahrzeug identifizierende Information, wie z.B. die Maut-ID, übermittelt wird.

Weiterhin umfasst die Erfindung eine Onboard-Unit nach Anspruch 5, im Wesentlichen zur Bestimmung von Mautstrecken, zur Bestimmung von Positionsdaten die an eine Filtereinheit zu übermitteln sind, wobei die Filtereinheit Kartenmaterial aufweist, so dass anhand von Positionsdaten Mautstrecken bestimmbar sind, umfassend die folgenden Komponenten:
- Eine Übermittlungseinheit, die Positionsdaten von Teilwegstrecken an die Filtereinheit sendet, wobei die Positionsdaten Übermittlung so erfolgt dass die Positionsdaten ohne Preisgabe der Identität auf Mautrelevanz überprüfbar sind, wobei eine Mautrelevanz gegeben ist, wenn eine Mautstrecke befahren wird;
- Eine Empfangseinheit, die Mauterhebungsdaten zur Vergebührung und Abrechnung von der Filtereinheit empfängt;
- Einen Speicher, der die mautpflichtigen Teilwegstrecken durch die OBU speichert, um dann die gesamte Strecke zu bilden,
- Eine Übermittlungseinheit, die am Ende der Fahrt die gesamte Strecke an eine Mautabrechnungsstelle übermittelt.

Dabei sendet die Übermittlungseinheit die Positionsinformationen von Teilwegstrecken regelmäßig, ohne Maut-ID und ohne Hinweis auf die Identität des Absenders an die Filtereinheit.

Vorzugsweise übermittelt die Übermittlungseinheit nicht die gesamte Strecke an die Filtereinheit.

Vorzugsweise laufen die Teilschritte zur Überprüfung auf Mautrelevanz und zur Übermittlung der Mautdaten am Ende der Fahrt völlig asynchron über unterschiedliche Verbindungen. Hierbei wird vorzugsweise bei jeder Übertragung zur Filtereinheit eine andere Verbindung mit nicht vorherzusehenden Netzwerk Adressen benutzt, so dass Rückschlüsse aus beiden Verarbeitungsinstanzen auf die jeweils andere ausgeschlossen sind.

Hierbei werden vorzugsweise folgende Daten von den Einheiten empfangen und/oder gespeichert werden:
- Straßensegment-Ids oder
- Straßenklassenkategorien mit Weglänge oder
- Bewertete Tarifdatensätze für die Teilwegstrecke.

Das Prinzip der anonymisierten Vorverarbeitung sensibler Daten zur Relevanzbewertung und nachgelagerter Weiterverarbeitung unter Preisgabe der Nutzeridentität, wobei die Zusammenführung von Identität und Nutzdaten ausschließlich im Endgerät erfolgt, ist nicht auf die Off Board Maut Anwendung beschränkt.

### Figurenbeschreibung:

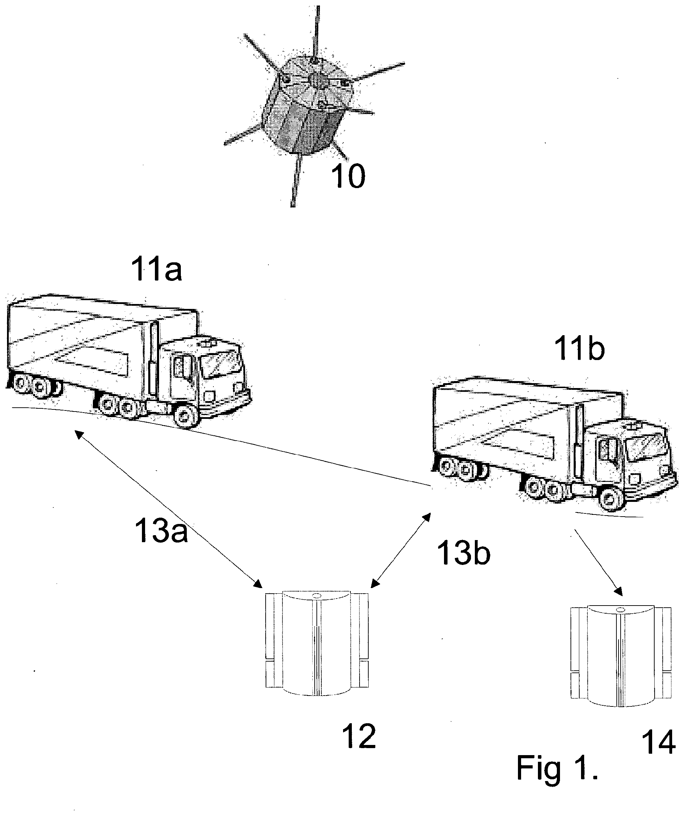

Die einzige Figur zeigt einen LKW, der an unterschiedlichen Positionen mit unterschiedlichen Servern kommuniziert.

### Bevorzugte Ausführungsform

In der bevorzugten Ausführungsform weist der LKW 11a, 11b eine Onboard Unit auf, die von einem Satelliten 10 GPS Informationen erhält, um die Positionen zu bestimmen. Diese werden von der OBU im LKW in regelmäßigen Abständen an die Filtereinheit 12 gesendet. So kann eine erste Kommunikation 13a frühzeitig an einer Stelle a erfolgen, während eine zweite Kommunikation 13b zu einem späteren Zeitpunkt durch den LKW an der Stelle b erfolgt. Wie bereits oben beschrieben wurde, werden nur die Positionen und keine identifizierenden Informationen übertragen, so dass eine eindeutige Identifizierung der OBU und damit des LKW nicht möglich ist. Es werden keinerlei Identitäten übertragen, einzig die Kommunikationsadresse (=IP-Adresse) ist der Bezugspunkt. Jedoch wird auch diese bei den einzelnen Kommunikationsverbindungen jeweils neu bestimmt, da der OBU bei Verbindungsaufbau eine dynamische IP-Adresse vom Netz zugewiesen wird. Abschließend, nach dem das Fahrzeug alle Daten gesammelt hat, die für eine Berechnung der Mautstrecke notwendig sind, werden diese an ein Abrechnungsserver 14 gesendet, der dann die Berechnung der Mautgebühren durchführt. Aufgrund des Umstandes, dass lediglich Informationen von der Filtereinheit 12 zum LKW 11a, 11b übertragen werden, aus denen geschlossen werden kann, ob der LKW sie sich auf einer Mautstrecke befindet oder nicht, kann die Kommunikation anonym erfolgen. Diese Anonymität wird erst am Ende der Fahrt aufgehoben, wenn die von Onboard-Unit die gesamte Strecke, für die Maut angefallen ist, an den Mautabrechnungsserver 14 sendet. Erst dann wird die Identität des Fahrzeuges preisgegeben.

Die bevorzugte Ausführungsform dient lediglich dem Verständnis der Erfindung. Sie soll keinerlei Einschränkung darstellen.

Der Schutzumfang und der Kern der Erfindung bestimmen sich aus den folgenden Ansprüchen.

### Bezugszeichenliste

10 GPS Satellit
11a LKW an Position a mit OBU
11bLKW an Position b mit OBU
12 Filtereinheit mit Kartenmaterial
13a Kommunikation zwischen Filtereinheit und LKW an Position a
13b Kommunikation zwischen Filtereinheit und LKW an Position b
14 Mauterhebungsstelle zum Empfangen der mautpflichtigen Strecke zur Mautberechnung

## Patentansprüche

1. Verfahren zur Bestimmung von Mautstrecken, mit einer Filtereinheit (12) und einer Onboard Unit, OBU, die miteinander kommunizieren können, und einer Mauterfassungsstelle (14), wobei die Filtereinheit Kartenmaterial aufweist, so dass anhand von Positionsdaten Mautstrecken bestimmbar sind, und umfassend die folgenden Schritte:
- Regelmäßiges Übermitteln von Positionsdaten von Streckensegmenten durch die OBU an die Filtereinheit, wobei das übermitteln der Positionsdaten ohne Hinweis auf die Maut-ID erfolgt, , und wobei die OBU keine Maut-ID an die Filtereinheit sendet,
- Überprüfen der übermittelten Positionsdaten auf Mautrelevanz durch die Filtereinheit, wobei eine Mautrelevanz gegeben ist, wenn eine Mautstrecke befahren wird, wobei mittels Kenntnis des vollständigen Streckennetzes und aktueller Tarifmodelle die tatsächlich mautpflichtigen Streckensegmente bestimmt werden, und Übermittlung von Mauterhebungsdaten zu diesen mautpflichtigen Streckensegmenten an die OBU, und wobei die Filtereinheit, nachdem die OBU den korrekten Erhalt von Mauterhebungsdaten bestätigt hat, sämtliche zentral gehaltenen Daten zu dieser Transaktion löscht;
- Speichern der mautpflichtigen Streckensegmente durch die OBU sowie Übermittlung der gesamten Strecke, für die Maut angefallen ist, am Ende der Fahrt an die Mauterhebungsstelle mit der Maut-ID des Fahrzeuges zur Vergebührung.

2. Das Verfahren nach dem vorhergehenden Anspruch, wobei die Übermittlung der Streckensegmente an die Filtereinheit zur Überprüfung auf Mautrelevanz und die Übermittlung der mautpflichtigen gesamten Strecke an die Mauterhebungsstelle am Ende der Fahrt völlig asynchron über unterschiedliche Kommunikations-Verbindungen durchgeführt werden.

3. Das Verfahren nach einem oder mehreren der vorhergehenden Ansprüche, wobei bei jeder Übertragung von der OBU zur Filtereinheit eine andere Kommunikations-Verbindung mit nicht vorherzusehenden Netzwerk Adressen benutzt wird, so dass Rückschlüsse der Filtereinheit auf die Identität der OBU ausgeschlossen sind.

4. Das Verfahren nach einem oder mehreren der vorhergehenden Ansprüche, wobei von der Filtereinheit folgende Daten gesendet werden:
- Straßensegment-Ids oder
- Straßenklassenkategorien mit Weglänge oder
- bewertete Tarifdatensätze für die Teilwegstrecke.

5. Eine Onboard-Unit, OBU, zur Benutzung in einem Verfahren zur Bestimmung von Mautstrecken nach einem Verfahren nach den Ansprüchen 1 bis 4, die eingerichtet ist Bestimmung von Positionsdaten, die an ein als Filtereinheit ausgelegtes Serversystem übermittelbar sind, umfassend die folgenden Komponenten:
- Eine Übermittlungseinheit, die dazu eingerichtet ist, regelmäßig die Positionsdaten von Streckensegmenten ohne Hinweis auf eine Maut-ID an die Filtereinheit zu senden, um durch die Filtereinheit prüfen zu lassen, ob eine Mautrelevanz gegeben ist, wobei eine Mautrelevanz gegeben ist, wenn eine Mautstrecke befahren wird;
- Eine Empfangseinheit, die dazu eingerichtet ist, Mauterhebungsdaten zur Vergebührung und Abrechnung von der Filtereinheit für die Streckensegmente zu empfangen;
- Einen Speicher, der dazu eingerichtet ist, die mautpflichtigen Streckensegmente durch die OBU zu speichern, um dann die gesamte mautpflichtige Strecke zu bilden,
- Eine Übermittlungseinheit, die dazu eingerichtet ist, am Ende der Fahrt die gesamte mautpflichtige Strecke bestehend aus den mautpflichtigen Streckensegmenten mit der Maut-ID an eine Mautabrechnungsstelle zu übermitteln.

6. Die Onboard-Unit nach dem vorhergehenden Anspruch, ausgebildet um die Übermittlung der Streckensegmente zur Überprüfung auf Mautrelevanz und die Übermittlung der gesamten mautpflichtigen Strecke am Ende der Fahrt völlig asynchron über unterschiedliche Kommunikations-Verbindungen durchzuführen.

7. Die Onboard-Unit nach einem oder mehreren der vorhergehenden Onboard-Unit-Ansprüche, ausgebildet, um bei jeder Übertragung zur Filtereinheit eine andere Kommunikations-Verbindung mit nicht vorherzusehenden Netzwerk Adressen zu benutzen, so dass Rückschlüsse der Filtereinheit auf die Identität der Onboard-Unit ausgeschlossen sind.

8. Die Onboard-Unit nach einem oder mehreren der vorhergehenden Onboard-Unit-Ansprüche, ausgebildet um folgende Daten von der Filtereinheit zu empfangen und/oder zu speichern:
- Straßensegment-Ids oder
- Straßenklassenkategorien mit Weglänge oder
- Bewertete Tarifdatensätze für die Teilwegstrecke.

## Claims

1. Method for determining toll roads, with a filter unit (12) and an on-board unit, OBU, which can communicate with each other, and a toll collection point (14), the filter unit having a mapping material, so that toll roads can be determined on the basis of position data, and comprising the following steps:
- regular transmission of road segment position data by the OBU to the filter unit, the transmission of position data taking place without reference to the toll ID, and the OBU not sending a toll ID to the filter unit;
- verification by the filtering unit of the position data transmitted for toll relevance, toll relevance being given when a toll road is used, the road segments actually subject to toll being determined by means of knowledge of the complete road network and current pricing models, and transmission of toll collection data for these road segments subject to toll to the OBU, and the filtering unit, after the OBU has confirmed the correct receipt of toll collection data, erasing all centrally maintained data for this transaction;
- storage by the OBU of the road segments subject to toll as well as, at the end of the journey, transmission of the complete road for which a toll has been incurred at the toll collection point with the vehicle's toll ID for invoicing.

2. Method according to the previous claim, in which the transmission of the road segments to the filter unit for the verification of the toll relevance and the transmission of the complete toll road to the toll collection point at the end of the journey are carried out completely asynchronously via different communication links.

3. Method according to one or more of the above claims, in which, during each transmission from the OBU to the filter unit, a different communication link with unpredictable network addresses is used in such a way that inferences of the filter unit on the identity of the OBU are excluded.

4. Method according to one or more of the above claims, in which the following data is sent by the filter unit:
- route segment IDs, or
- road class categories with a trip length, or
- estimated tariff data records for the route segment.

5. On-board unit, OBU, for use in a method for determining toll roads according to a method according to one of claims 1 to 4, which is configured for determining position data, which are suitable for transmission to a server system designed as a filter unit, comprising the following components:
- a transmission unit that is configured to regularly send route segment position data to the filter unit without reference to a toll ID in order to cause the filter unit to check whether a toll relevance is given, a toll relevance being given when a toll road is used;
- a reception unit, which is configured to receive toll collection data for billing and payment from the filter unit for road segments;
- a memory, which is configured to store the road segments subject to toll by the OBU, in order to then form the full toll road;
- a transmission unit, which is configured to transmit, at the end of the journey, the full toll road consisting of the toll road segments with the toll ID to a toll payment point.

6. On-board unit according to the previous claim, configured to carry out the transmission of road segments for the verification on the relevance of toll and the transmission of the full toll road at the end of the journey in a totally asynchronous manner via different communication links.

7. Embedded unit according to one or more of the previous embedded unit claims, configured to use a different communication link with unpredictable network addresses during each transmission to the filter unit, so that inferences from the filter unit about the identity of the embedded unit are excluded.

8. On-board unit according to one or more of the previous on-board unit claims, configured to receive and/or store the following data from the filter unit:
- route segment IDs, or
- road class categories with a trip length, or
- estimated tariff data records for the partial route.

## Revendications

1. Procédé pour la détermination de routes à péage, avec une unité de filtrage (12) et une unité embarquée, OBU, qui peuvent communiquer entre elles, et un point de collecte de péage (14), l'unité de filtrage présentant un matériel cartographique, de telle sorte que des routes à péage sont déterminables sur la base de données de position, et comportant les étapes suivantes :
- transmission régulière de données de position de segments de route par l'OBU à l'unité de filtrage, la transmission des données de position ayant lieu sans référence à l'ID de péage, et l'OBU n'envoyant pas d'ID de péage à l'unité de filtrage ;
- vérification par l'unité de filtrage des données de positions transmises pour la pertinence de péage, une pertinence de péage étant donnée lorsqu'une route à péage est empruntée, les segments de route effectivement soumis à péage étant déterminés au moyen de la connaissance du réseau routier complet et des modèles de tarification courants, et transmission de données de perception de péage pour ces segments de route soumis à péage à l'OBU, et l'unité de filtrage, après que l'OBU a confirmé la réception correcte de données de perception de péage, effaçant toutes les données maintenues de façon centrale pour cette transaction ;
- mémorisation par l'OBU des segments de route soumis à péage ainsi que, à la fin du voyage, transmission de la route complète pour laquelle un péage a été engagé au point de perception de péage avec l'ID de péage du véhicule pour la facturation.

2. Procédé selon la revendication précédente, dans lequel la transmission des segments de route à l'unité de filtrage pour la vérification de la pertinence de péage et la transmission de la route complète soumise à péage au point de perception de péage à la fin du voyage sont réalisées de façon totalement asynchrone par l'intermédiaire de liaisons de communication différentes.

3. Procédé selon une ou plusieurs des revendications précédentes, dans lequel, lors de chaque transmission de l'OBU à l'unité de filtrage, une liaison de communication différente avec des adresses de réseau non prévisibles est utilisée de telle sorte que des inférences de l'unité de filtrage sur l'identité de l'OBU sont exclues.

4. Procédé selon une ou plusieurs des revendications précédentes, dans lequel les données suivantes sont envoyées par l'unité de filtrage :
- des ID de segments de route, ou
- des catégories de classe de route avec une longueur de trajet, ou
- des enregistrements de données de tarif estimé pour le segment de route.

5. Unité embarquée, OBU, pour l'utilisation dans un procédé pour la détermination de routes à péage selon un procédé selon l'une des revendications 1 à 4, qui est configurée pour la détermination de données de position, qui sont aptes à être transmises à un système de serveur conçu en tant qu'unité de filtrage, comportant les composants suivants :
- une unité de transmission qui est configurée pour envoyer régulièrement les données de position de segments de route à l'unité de filtrage sans référence à un ID de péage afin d'amener l'unité de filtrage à vérifier si une pertinence de péage est donnée, une pertinence de péage étant donnée lorsqu'une route à péage est empruntée ;
- une unité de réception, qui est configurée pour recevoir des données de collecte de péage pour la facturation et le règlement à partir de l'unité de filtrage pour les segments de route ;
- une mémoire, qui est configurée pour mémoriser les segments de route soumis à péage par l'OBU, afin de former ensuite la route soumise à péage complète ;
- une unité de transmission, qui est configurée pour, à la fin du voyage, transmettre la route soumise à péage complète constituée par les segments de route soumis à péage avec l'ID de péage à un point de règlement de péage.

6. Unité embarquée selon la revendication précédente, configurée pour réaliser la transmission des segments de route pour la vérification sur la pertinence de péage et la transmission de la route soumise à péage complète à la fin du voyage de façon totalement asynchrone par l'intermédiaire de liaisons de communication différentes.

7. Unité embarquée selon une ou plusieurs des revendications d'unité embarquée précédentes, configurée pour utiliser une liaison de communication différente avec des adresses de réseau non prévisibles lors de chaque transmission à l'unité de filtrage, de telle sorte que des inférences de l'unité de filtrage sur l'identité de l'unité embarquée sont exclues.

8. Unité embarquée selon une ou plusieurs des revendications d'unité embarquée précédentes, configurée pour recevoir et/ou mémoriser les données suivantes de l'unité de filtrage :
- des ID de segment de route, ou
- des catégories de classe de route avec une longueur de trajet, ou
- des enregistrements de données de tarif estimé pour la route partielle.
